# EUROPÄISCHE PATENTANMELDUNG

(11) **EP 2 261 503 A1**
(43) Veröffentlichungstag der Anmeldung: **15.12.2010**
(21) Anmeldenummer: 09162635.8
(22) Anmeldetag: 12.06.2009
(51) Int. Cl.: F03D 9/00, F03D 9/02

(54) **Windturbine**

(71) Anmelder: Aresco SA, 1752 Villars sur Glane (CH)
(72) Erfinder: Scheibel, René, 17237 Blumenholz (DE)
(74) Vertreter: UEXKÜLL & STOLBERG

(57) **Zusammenfassung**

Die Erfindung betrifft eine Windturbine (1, 1', 1", 100, 100', 100", 100"', 100"") mit einem hydrostatischen Hauptantrieb.

Erfindungsgemäß weist die Windturbine abtriebsseitig einen hydraulischen Festmotor (60, 65) und einen hydraulischen Verstellmotor (62, 67) auf. Hierdurch wird ein verbesserter Wirkungsgrad der hydraulisch betriebenen Windturbine möglich.

Zudem werden Instabilitäten und Schwingungen im hydraulischen Kreislauf verringert.

## Beschreibung

Gegenstand der vorliegenden Erfindung ist eine Windturbine nach dem Oberbegriff des Anspruchs 1.

Die Nutzung der Windkraft ist nicht nur aus ökologischen Gründen von großer Bedeutung. Da der Wind als kostenlose Energiequelle zur Verfügung steht, hat sich auch die ökonomische Bedeutung der Windkraft vergrößert.

Bei den meisten in Betrieb stehenden Windkraftanlagen treibt ein Rotor eine Welle an, welche mittel- oder unmittelbar an einen Generator gekoppelt wird und diesen zur Stromerzeugung antreibt. Bereits früh wurde erkannt, dass zur Nutzung der unregelmäßig auftretenden Windkraft ein hydraulischer Antriebsstrang von Nutzen sein könnte.

So ist beispielsweise aus der CH 234 202 eine Windkraftanlage bekannt, bei welcher ein Rotor über eine Welle mit einer hydraulischen Pumpe gekoppelt ist, welche über einen geschlossenen Kreislauf mit einem hydraulischen Motor gekoppelt wird. Der hydraulische Motor treibt den Generator an. Bei dem hydraulischen Motor handelt es sich um einen Motor mit veränderbarem bzw. verstellbarem Schluckvolumen. Hierdurch ist es möglich, aufgrund der Verstellung des Schluckvolumens in Abhängigkeit von beispielsweise der Windgeschwindigkeit den Generator mit nahezu konstanter Drehzahl anzutreiben. Ein Nachteil dieser Windkraftanlage ist die unzureichende Steuerung und der Wirkungsgrad der Anlage.

Ein weiteres Beispiel für eine auf einem hydrostatischen Antrieb beruhende Windkraftanlage ist aus der JP 11-287178 A bekannt. Auch hier treibt ein Rotor eine hydraulische Pumpe an, welche über einen geschlossenen Kreislauf mit einem Motor mit veränderbarem Schluckvermögen verbunden ist. Als Mechanismen für die Verstellung des Schluckvolumens des hydraulischen Motors wird entweder eine vom Druck oder eine vom Volumenstrom abhängige servogeregelte Steuerung vorgeschlagen. Ein Nachteil der vorgenannten Windkraftanlage ist ein nur unzureichender Wirkungsgrad des hydraulischen Antriebs und die Art der Steuerung der Verstellung.

Aufgabe der vorliegenden Erfindung ist es, eine Windturbine zu schaffen, welche den Wirkungsgrad der Windturbine steigert. Die Aufgabe wird mittels einer Windturbine, welche die im Anspruch 1 aufgeführten Merkmale aufweist, gelöst.

Die erfindungsgemäße Windturbine weist einen Rotor, mindestens eine hydraulische Pumpe, welche über eine Rotorwelle mit dem Rotor verbunden ist, sowie mindestens einen ersten Generator auf. Zwischen dem Rotor und der hydraulischen Pumpe ist vorzugsweise kein Getriebe angeordnet, so dass die Rotorbewegung direkt auf die hydraulische Pumpe übertragen wird. Des Weiteren sind eine erste und eine zweite hydraulische Motoreinheit vorhanden, wobei mindestens die erste Motoreinheit über eine erste Abtriebswelle mit dem einen ersten Generator verbunden ist. Zwischen der hydraulischen Pumpe und der ersten und der zweiten hydraulischen Motoreinheit befindet sich ein geschlossener Kreislauf, welcher eine Hochdruckleitung zum Führen eines hydraulischen Mediums, wie beispielsweise Öl, zur mindestens ersten und zweiten Motoreinheit und eine Niederdruckleitung zum Führen des hydraulischen Mediums von der ersten und zweiten Motoreinheit zur Pumpe aufweist. Hierbei ist zu beachten, dass im geschlossenen Kreislauf, insbesondere der Hochdruckleitung, kein Drehmomentwandler vorgesehen oder vorhanden ist, so dass das hydraulische Medium unmittelbar von der Pumpe zum hydraulischen Motor geführt ist.

Erfindungsgemäß weist die erste Motoreinheit mindestens einen Festmotor mit einem konstanten Schluckvolumen auf und/oder eine Steuerung zum Regulieren des Volumenstroms ist derart eingerichtet, dass die erste Motoreinheit auf ein konstantes Schluckvolumen eingeregelt ist. Die Steuerung dient dabei der Regulierung eines Volumenstroms im geschlossenen Kreislauf. Weiterhin umfasst die Windturbine eine zweite Motoreinheit, welche mindestens einen Verstellmotor mit einem verstellbaren Schluckvolumen aufweist. Die Steuerung wirkt direkt auf die Verstellung des Verstellmotors. Die Verstellung eines Verstellmotors beeinflusst den durch den Festmotor der ersten Motoreinheit fließenden Volumenstrom.

Mithilfe des zusätzlichen Festmotors wird unter anderem ein verbesserter Wirkungsgrad der Windturbine erreicht. Obgleich Verstellmotoren nicht per se einen schlechten Wirkungsgrad aufweisen, ist der Wirkungsgrad, welcher vom Druck im geschlossenen Kreislauf und vom Verstellwinkel abhängt, insbesondere bei niedrigen Drücken und kleinen Verstellwinkeln sehr gering. Jedoch muss der Bereich beim Anlaufen der Windturbine ein Bereich geringen Druckes im geschlossenen Kreislauf durchlaufen werden, um den Generator, vorzugsweise einen Synchrongenerator, auf seine Nenndrehzahl zu bringen. Durch den zusätzlichen Festmotor ist nunmehr lediglich die Verlustleistung des Verstellmotors bei der Nenndrehzahl des angeschlossenen Generators von Bedeutung. Diese Verlustleistung muss vom Rotor aufgebracht werden können.

Aufgrund des Vorhandenseins des Festmotors ist es also möglich, schon bei geringen Windgeschwindigkeiten Leistung an den Generator abzugeben.

Durch die Hinzunahme eines weiteren Festmotors, welcher im Volumen derart ausgelegt ist, dass er beispielsweise einen bei der Anlaufdrehzahl des Rotors vorliegenden Volumenstrom vollständig aufnehmen kann, wird der Wirkungsgrad der gesamten Windturbine deutlich erhöht. Insbesondere ist es möglich, durch ausschließliche Regulierung der zweiten Motoreinheit, d. h. insbesondere der Veränderung des Schluckvolumens der zweiten Motoreinheit, eine Regulierung des Volumenstroms vorzunehmen, wobei über einen großen Arbeitsbereich des Rotors bzw. des Windes eine hoher Wirkungsgrad der Windturbine genutzt werden kann.

Wird der erste Generator mit einem Verbraucher verbunden, fällt zudem entlang der zweiten Motoreinheit, insbesondere des Verstellmotors der zweiten Motoreinheit, lediglich eine geringe Leistung (Verlustleistung) ab. Des Weiteren kann die zweite Motoreinheit bei einer Vergrößerung des Volumenstroms, beispielsweise durch aufkommenden Wind, in einen Arbeitsbereich geführt werden, bei welchem der Wirkungsgrad der Verstelleinheit sehr hoch ist. Ein derartiger Arbeitsbereich könnte beispielsweise bei kleinem Verstellwinkel und dementsprechend hohen Drücken vorliegen. Insgesamt betrachtet ergibt sich bei gleichzeitiger Verwendung der ersten und zweiten Motoreinheit ein verbesserter Wirkungsgrad entlang des gesamten Arbeitsbereichs der Windturbine.

An dieser Stelle sei erwähnt, dass die erste Motoreinheit weitere Motoren neben dem mindestens einen Feststellmotor aufweisen kann. Hierbei kann die erste Motoreinheit auch einen Verstellmotor mit veränderbarem Schluckvolumen aufweisen. In einem ersten Betriebszustand, d. h. bei Leistungsentnahme am ersten Generator, wird das Schluckvolumen eines eventuell vorhandenen Verstellmotors der ersten Motoreinheit jedoch nicht geändert und vorzugsweise in einem Bereich geregelt, in welchem der Verstellmotor einen guten Wirkungsgrad hat, d.h. bei großen Verstellwinkeln und hohen Drücken. Analog hierzu kann die zweite Motoreinheit ebenfalls einen zusätzlichen Motor, wie beispielsweise einen Festmotor mit konstantem Schluckvolumen, aufweisen.

Für den Fall, dass in der Windturbine mehrere Motoren mit veränderbarem Schluckvolumen vorliegen, wird der Volumenstrom durch die Steuerung lediglich eines im geschlossenen Kreislauf zugeschalteten Verstellmotors variiert. Hierdurch werden Rückkopplungen und Instabilitäten im geschlossenen Kreislauf vermieden.

Hierbei ist zu beachten, dass ein Motor der ersten oder zweiten Motoreinheit lediglich dann im geschlossenen Kreislauf ist, wenn der Motor eine direkte Verbindung zwischen der Hochdruckleitung und der Niederdruckleitung bildet. So können die einzelnen Motoren bzw. die erste oder zweite Motoreneinheit mittels Ventilen aus dem geschlossenen Kreis genommen werden. Zur Sicherung der einzelnen Motoren der ersten und zweiten Motoreinheit weisen diese vorzugsweise Nachsaugventile auf.

Weitere Ausführungsformen sind in den unter- bzw. nebengeordneten Ansprüchen offenbart.

Bei der vorliegenden Erfindung können die erste und die zweite Motoreinheit jeweils mehrere Motoren aufweisen. Dabei kommt der Steuerung unter anderem auch die Aufgabe zu, einen Motor, welcher in einem ersten Betriebszustand beispielsweise der ersten Motoreinheit zugeordnet ist, anschließend der zweiten Motoreinheit zuzuordnen und umgekehrt. Wichtig ist lediglich, dass im ersten Betriebszustand, d.h. nach Einhängen des mindestens ersten Generators lediglich ein Verstellmotor der zweiten Motoreinheit von der Steuerung angesteuert wird und übrige eventuell im geschlossenen Kreislauf zugeschaltete Verstellmotoren nicht verstellt werden. Innerhalb des ersten Betriebszustand können jedoch verschiedene Verstellmotoren angesteuert werden, zu einem Zeitpunkt jedoch ausschließlich ein einziger.

Insbesondere können die erste und die zweite Motoreinheit identisch ausgebildet sein, d. h. einen Feststellmotor und einen Verstellmotor mit veränderbarem Schluckvolumen aufweisen. Obgleich in diesem Beispiel jede der Motoreinheiten wiederum eine erste und zweite Motoreinheit im Sinne der Erfindung aufweist, wird bei Verwendung zweier Generatoren lediglich eine Verstelleinheit der zweiten Motoreinheit von der Steuerung angesteuert. Alle anderen Verstelleinheiten werden auf ein konstantes Schluckvolumen eingeregelt.

Um den Volumenstrom durch Veränderung des Verstellwinkels des Verstellmotors zu regulieren, ist die Steuerung zum Regulieren des Volumenstroms mit einem oder mehreren Sensoren verbunden. Diese Sensoren umfassen Sensoren zur Erfassung der Bewegung der Rotorwelle, einen Sensor zur Erfassung einer Druckdifferenz zwischen Hochdruck- und Niederdruckleitung, d.h. einer Druckdifferenzsensorik, einen Sensor zur Erfassung der Leistung des ersten Generators und/oder einen Sensor zur Erfassung der Bewegung der ersten Abtriebswelle, sowie einer Windsensorik zum Erfassen der Windcharakteristik. Sollte die Windturbine mehr als einen Generator aufweisen, muss die Steuerung dementsprechend auch mit Sensoren zur Erfassung der Leistung des weiteren Generators bzw. zur Erfassung der Bewegung einer weiteren Abtriebswelle ausgestattet sein.

Durch die Sensoren werden der Steuerung die zum Regulieren des Volumenstroms notwendigen Größen mitgeteilt, so dass Veränderungen hinsichtlich des Windes bzw. der am Generator abgenommenen Leistung zu einer Änderung des Verstellwinkels des Verstellmotors der zweiten Motoreinheit durch die Steuerung vorgenommen werden kann.

Die Leistungsberechnung der Windturbine bei Vernachlässigung des Wirkungsgrades beträgt P = p × q, wobei P die Leistung, p den Druck und q den Volumenstrom im geschlossenen Kreislauf bezeichne. Das Schluckvolumen der zweiten Motoreinheit wird im ersten Betriebszustand so eingestellt, dass dem Rotor nur so viel Leistung entzogen (und dem Generator bzw. den Generatoren zugeführt) wird, wie der Rotor unter Beibehaltung des aerodynamischen Wirkungsgradbereichs bei gegebener Windcharakteristik liefern kann.

Optional weist die Windturbine einen an der Niederdruckleitung angeordneten Niederdruckspeicher auf, welcher ebenfalls geschlossen ausgeführt ist und somit den geschlossenen Kreislauf nicht unterbricht. Mithilfe des Niederdruckspeichers ist es möglich, selbst bei plötzlich aufkommenden Drehzahlsteigerungen des Rotors mehr hydraulisches Medium aus dem Niederdruckspeicher zur Verfügung zu stellen.

In weiteren Ausführungsformen können zusätzlich ein Hochdruckspeicher in der Hochdruckleitung zum Ausgleich von kurzzeitigen Druckschwankungen sowie ein Speise- und Spülkreislauf und/oder ein Heißöl-Wechselkreislauf Teil der Windturbine sein.

In einer weiteren Ausführungsform weist die Windturbine eine Vorrichtung zur Erfassung von Wetterdaten auf, wobei diese Vorrichtung mit der Steuerung verbunden ist. Da das Wetter großen Einfluss auf die "Qualität" des Windes und somit die dem Wind entnehmbare Energie hat, empfiehlt es sich, verschiedene Parameter des Wetters zu erfassen und der Steuerung zur Verfügung zu stellen. Dies betrifft insbesondere diejenigen Werte, welche zur Ermittlung der Luftdichte notwendig sind, wie beispielsweise der Luftdruck, die Lufttemperatur, die Luftfeuchtigkeit und die Windböigkeit.

In einer weiteren Ausführungsform ist die zweite Motoreinheit über die erste Abtriebswelle mit dem ersten Generator verbunden. Dies bedeutet, dass die erste und die zweite Motoreinheit jeweils an derselben Generatorwelle angreifen und insgesamt einen Generator antreiben.

In einer weiteren Ausführungsform weist die Windturbine eine zweite Abtriebswelle mit einem damit verbundenen zweiten Generator auf, wobei die zweite Motoreinheit nunmehr mit der zweiten Abtriebswelle verbunden ist. Dazu wird der geschlossene Kreislauf abtriebsseitig in zwei jeweils geschlossene Teilkreisläufe aufgeteilt, wobei die erste Motoreinheit in einem ersten geschlossenen Teilkreislauf und die zweite Motoreinheit in einem zweiten geschlossenen Teilkreislauf angeordnet ist.

Nachfolgend soll die Erfindung anhand einiger Ausführungsbeispiele genauer erläutert werden. Bei den verschiedenen Ausführungsformen ist zu beachten, dass einzelne Merkmale auf verschiedene Ausführungsformen übertragen werden können. Es zeigen
- Fign. 1a-c: eine erste Ausführungsform einer Windtur- bine;
- Fig. 2: eine zweite Ausführungsform einer Wind- turbine;
- Fig. 3: eine dritte Ausführungsform einer Wind- turbine;
- Fig. 4: eine vierte Ausführungsform einer Wind- turbine;
- Fig. 5: eine fünfte Ausführungsform einer Wind- turbine;
- Fig. 6: eine sechste Ausführungsform einer Wind- turbine;
- Fig. 7: eine siebte Ausführungsform einer Wind- turbine und
- Fig. 8: eine achte Ausführungsform einer Windtur- bine.

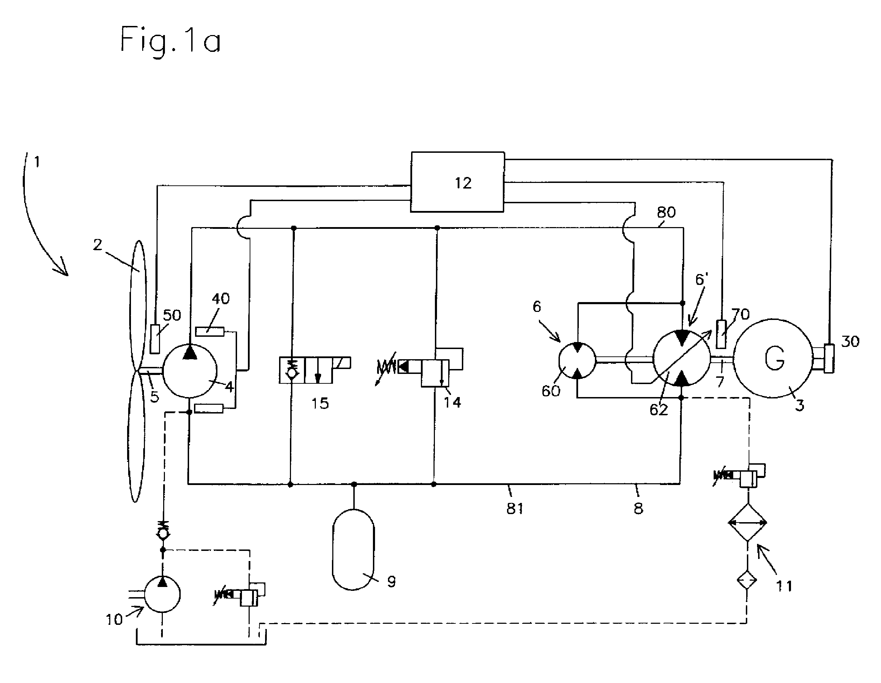

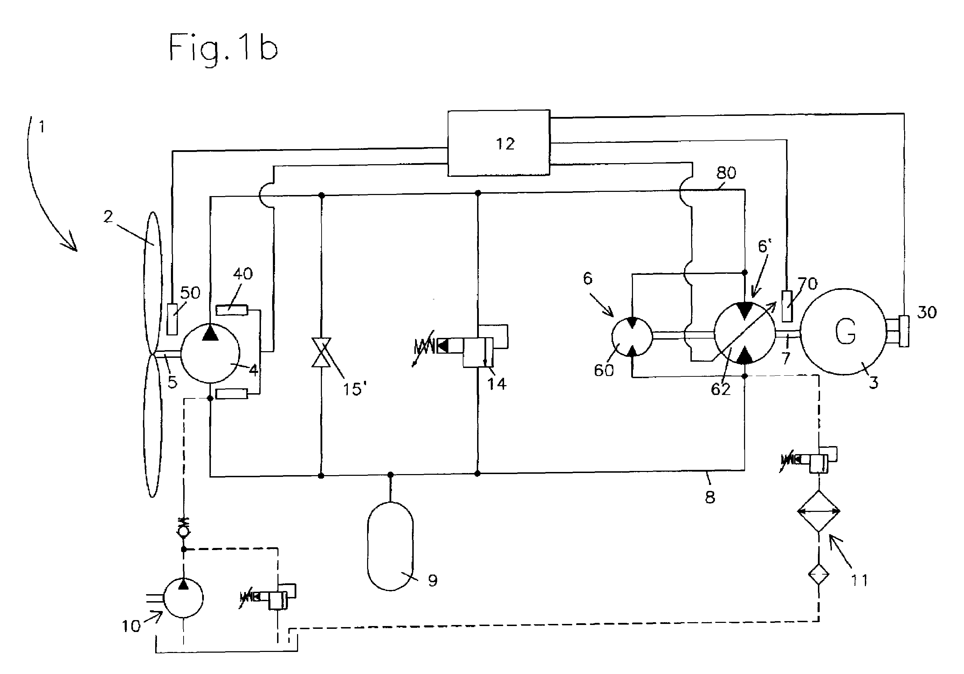

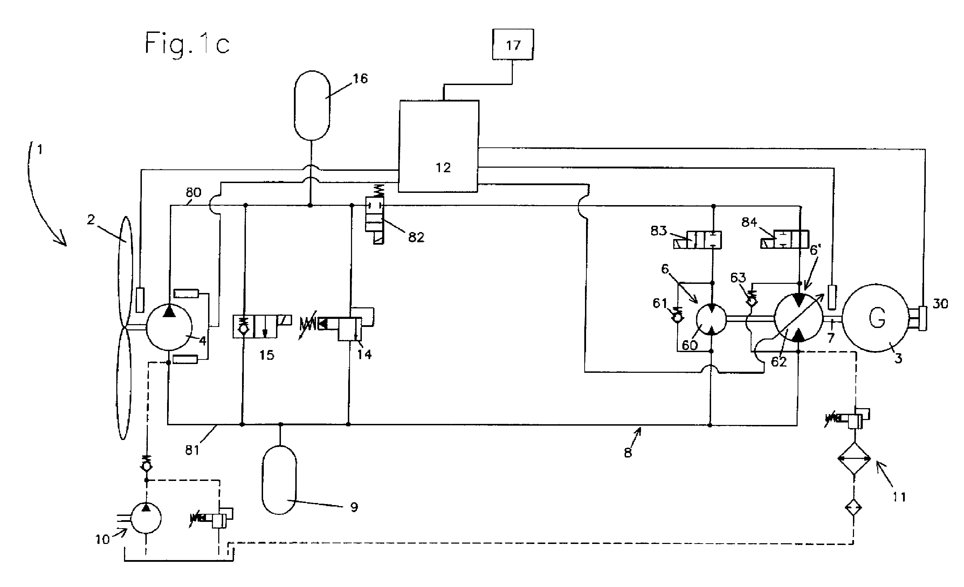

Die in den Figuren 1 bis 8 aufgeführten Schaltpläne der Windturbine sind lediglich schematisch. Von daher wurden in den Zeichnungen lediglich für die Erfindung wichtige Aspekte einer Windturbine berücksichtigt. Bei den aufgeführten Ausführungsformen handelt es sich sämtlich um Windturbinen, welche vollständig im Turm, besonders vorzugsweise in der Nazelle oder Gondel einer Windkraftanlage untergebracht werden können, jedoch teilweise auch außerhalb eines Turmes angeordnet sein können.

Die Fign. 1 zeigen eine erste Grundform einer erfindungsgemäßen Windturbine. Die Windturbine 1 weist einen Rotor 2 und einen Generator 3 auf, welcher mittels der Bewegung des Rotors 2 angetrieben wird. Der Rotor 2 steht über die Rotorwelle 5 mit einer hydraulischen Pumpe 4 in Verbindung, wobei die Pumpe 4 direkt mit der Rotorwelle 5 verbunden ist. Der erste Generator 3 ist mit einer ersten Motoreinheit 6 und einer zweiten Motoreinheit 6' über eine erste Abtriebswelle 7 verbunden.

Die hydraulische Pumpe 4 ist direkt mit der ersten Motoreinheit 6 und der zweiten Motoreinheit 6' über einen geschlossenen Kreislauf 8, insbesondere über die Hochdruckleitung 80, verbunden. Zur Führung eines hydraulischen Mediums von den Motoreinheiten zurück zur Pumpe 4 ist zudem eine Niederdruckleitung 81 eingezeichnet.

An der Niederdruckleitung 81 befindet sich ein Niederdruckspeicher 9, welcher bei plötzlich aufkommenden Drehzahlsteigerungen des Rotors zusätzliches hydraulisches Medium zur Verfügung stellen kann. Weiterhin weist die Windturbine 1 einen Speise- und Spülkreislauf 10 auf, mittels dessen verbrauchtes und gereinigtes Öl über Ventile in den geschlossenen Kreislauf 8 geführt werden kann. Weiterhin ist ein Heißöl-Wechselkreislauf 11 vorhanden, welcher zum Austausch von heißem Öl aus dem Kreislauf 8 dient. Der Speise- und Spülkreislauf sowie der Heißölwechselkreislauf besitzen jeweils einen Zugang zum geschlossenen Kreislauf 8, sind jedoch nicht Teil dieses geschlossenen Kreislaufs.

Die Windturbine 1 weist weiterhin eine Steuerung 12 auf, welche mit Sensoren verbunden ist. Die Sensoren umfassen einen Sensor 50 zur Erfassung der Bewegung der Rotorwelle 5. Weiterhin steht die Steuerung 12 mit einem Sensor 30 zur Erfassung der abgegebenen Leistung am ersten Generator 3 in Verbindung. Zusätzlich ist ein weiterer Sensor 70 eingezeichnet, welcher zur Erfassung der Bewegung der ersten Abtriebswelle 7 dient. Weiterhin ist ein Sensor 40 zur Erfassung eines Druckunterschieds zwischen der Hochdruckleitung und der Niederdruckleitung mit der Steuerung 12 verbunden.

Die erste Motoreinheit 6 umfasst einen Festmotor 60, welcher direkt mit der ersten Abtriebswelle 7 verbunden ist. Die zweite Motoreinheit 6' umfasst einen Verstellmotor 62, welcher über eine Verstelleinheit verfügt, d. h., dass das vom Verstellmotor 62 aufnehmbare Schluckvolumen veränderbar bzw. verstellbar ist. Der Festmotor 60 und der Verstellmotor 62 sind beide direkt mit der ersten Abtriebswelle 7 verbunden und zueinander parallel im geschlossenen Kreislauf 8 geschaltet.

In der Steuerung 12 wird anhand der ermittelten Sensordaten der Verstellwinkel der Verstelleinheit des Verstellmotors 62 derart geändert, dass für den Fall, dass ein Verbraucher an den Generator angeschlossen ist und der Generator Leistung abgibt bzw. aufnimmt, dem Rotor nur so viel Leistung entzogen wird, wie vom Verbraucher angefordert wird. Die maximal anforderbare Leistung ist abhängig von der maximal durch den Rotor unter der zum Zeitpunkt der Leistungsentnahme herrschenden Windcharakteristik lieferbaren Leistung.

Zusätzlich weist der geschlossene Kreislauf 8 noch ein Überdruckventil 14 sowie ein Anlaufventil 15 auf. Beide vorgenannten Ventile verbinden die Hochdruckleitung 80 unter Umgehung der ersten und zweiten Motoreinheit direkt mit der Niederdruckleitung 81. Das Überdruckventil verhindert, dass im geschlossenen Kreislauf zu hohe Drücke auftreten können. Das Anlaufventil 15 dient dem leistungsarmen Pumpenanlauf beim Anfahren des Rotors.

Im Folgenden soll kurz auf den Anfahrvorgang der Windturbine 1 eingegangen werden. Zunächst wird bei aufkommendem Wind das Anlaufventil 15 derart geöffnet, dass der Rotor 2 durch den aufkommenden Wind in Bewegung versetzt wird. Nachdem der Rotor 2 eine Anlaufdrehzahl erreicht hat, d. h. die Drehzahl des Rotors zur Abgabe von Leistung an einen Verbraucher ausreichend ist, wird das Anlaufventil 15 geschlossen, so dass das hydraulische Medium nunmehr über die Hochdruckleitung 80 durch die erste und zweite Motoreinheit gepumpt wird. Durch eine entsprechende Verstellung der Verstelleinheit des Verstellmotors 62 nimmt der Festmotor 60 der ersten Motoreinheit 6 bereits zu diesem Zeitpunkt das ihm zur Verfügung stehende konstante Schluckvolumen auf. Nachdem der Generator 3 seine Nenndrehzahl erreicht hat, wird dieser an das Netz bzw. an einen Verbraucher angeschlossen. In diesem ersten Betriebszustand liefert der Rotor 2 eine Leistung, welche mittels der hydraulischen Pumpe 4 über den geschlossenen Kreislauf 8 an die erste und zweite Motoreinheit übergeben wird, wobei diese derart geregelt ist, dass die vom ersten Generator 3, welcher ein Synchrongenerator ist, angeforderte Leistung abgegeben werden kann. Der Verstellwinkel wird von der Steuerung 12 dabei derart geändert, dass das durch die Leistungsaufnahme des Generators 2 entstehende Gegenmoment nicht größer als das Antriebsmoment des Rotors ist. Hierdurch wird der aerodynamische Wirkungsgrad des Rotors bei der vorliegenden Windcharakteristik optimal ausgenutzt. Dadurch, dass durch die Verstellung des Verstellwinkels des Verstellmotors 62 der zweiten Motoreinheit 6' der Volumenstrom, welcher durch die Pumpe 4 transportiert wird, aufgrund des sich ergebenden höheren Widerstands zunächst in den Festmotor 60 umgeleitet wird, wird von Anfang an die volle Wirkleistung des Festmotors 60 mit dem damit zusammenhängenden Wirkungsgrad der Windturbine 1 zur Verfügung gestellt. Erst bei anschließend auftretenden höheren Volumenströmen trägt auch die zweite Motoreinheit 6' einen signifikanten Teil zur Übertragung der an den Verbraucher abzugebenden Leistung mittels des Generators bei.

In der Fig. 1b ist eine weitere Variante der in Fig. 1a gezeigten Windturbine 1 gezeigt, wobei lediglich das Anlaufventil 15 durch ein vereinfachtes schaltbares Anlaufventil 15' ersetzt wurde.

In der Fig. 1c sind weitere Modifikationen an der in der Fig. 1a gezeigten Windturbine 1 gezeigt. Von daher soll lediglich auf die zusätzlichen Merkmale eingegangen werden. Zunächst ist ein Hochdruckspeicher 16 erkennbar, welcher beispielsweise aufgrund von Windböen in den geschlossenen Kreislauf 8 eingetragene Druckschwankungen abfedert. Zudem verringert der Hochdruckspeicher die Schwingungsneigung des geschlossenen Kreislaufs. Weiterhin ist eine Vorrichtung zur Erfassung von Wetterdaten 17 mit der Steuerung 12 verbunden, wodurch es der Steuerung 12 möglich ist, die "Qualität" des Windes anhand der Luftfeuchtigkeit, Luftdichte und -temperatur und weiterer Parameter besser zu bestimmen.

In die Hochdruckleitung 80 ist ein als Zwei-WegeVentil ausgebildetes Sperrventil 82 eingezeichnet, welches im geöffneten Zustand die erste Motoreinheit 6 und die zweite Motoreinheit 6' an die Hochdruckleitung 80 koppelt. Beim Schließen des Sperrventils 82 wird der Rotor aufgrund des in der Hochdruckleitung 80 erzeugten Gegenmoments zum Antriebsmoment des Rotors 2 gebremst, wobei der Druck bis zum Auslösedruck des Überdruckventils 14 ansteigen kann. Das Überdruckventil dient der Begrenzung der Anlagenleistung. Das maximale Gegenmoment ergibt sich so aus dem Moment der Pumpe 4 bei Auslösedruck des Überdruckventils 14.

Zusätzlich zum Sperrventil 82 sind weitere Sperrventile 83 und 84 eingezeichnet, wobei das Sperrventil 83 die erste Motoreinheit 6 in den geschlossenen Kreislauf 8 schaltet und das Sperrventil 84 die zweite Motoreinheit 6' in den geschlossenen Kreislauf 8 schaltet. Des Weiteren zeigt die erste Motoreinheit 6 ein dem Festmotor 60 zugeordnetes Nachsaugventil 61, welches zum Schutz der ersten Motoreinheit 6 ausgebildet ist. Analog hierzu weist der Verstellmotor 62 ein Nachsaugventil 63 auf.

Im normalen Betriebszustand ist das Ventil 83 geöffnet, das Sperrventil 84 hingegen geschlossen. Bei Bedarf wird das Sperrventil 84 geöffnet und wie anhand der Fig. 1a erläutert verfahren.

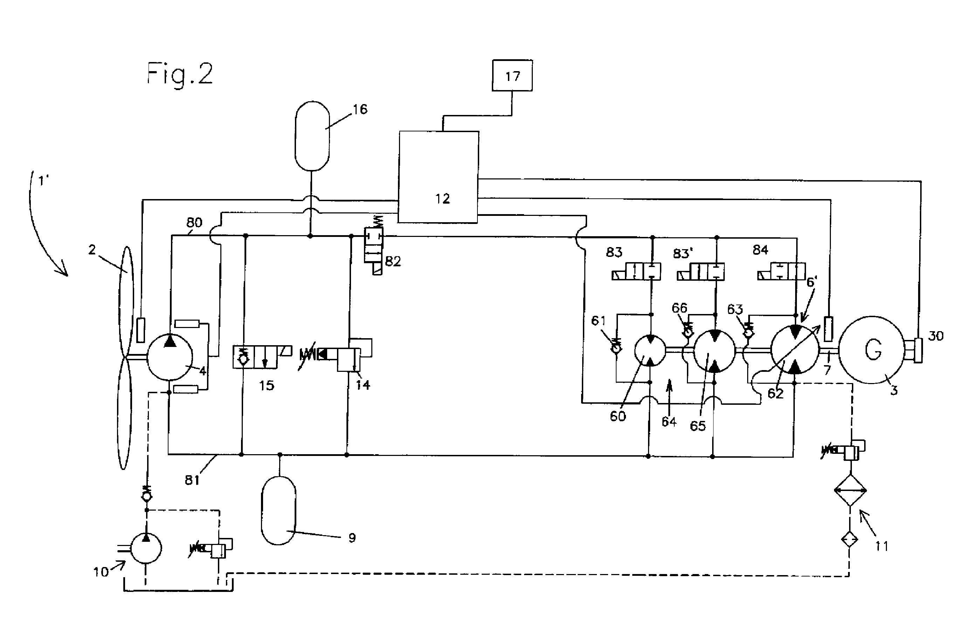

In der Fig. 2 findet sich eine weitere Variante einer erfindungsgemäßen Windturbine. Die Windturbine 1' weist im Gegensatz zu den bisher beschriebenen Windturbinen 1 eine veränderte erste Motoreinheit 64 auf, welche einen ersten Festmotor 60 mit zugeordnetem Nachsaugventil 61 und einen zweiten Festmotor 65 mit zugeordnetem Nachsaugventil 66 umfasst. Beide Festmotoren 60, 65 greifen auf der ersten Abtriebswelle 7 an und sind zum Antrieb des Generators 3 ausgebildet.

Wie bereits zur Fig. 1c erläutert, dient das Sperrventil 83 dazu, den Festmotor 60 in den geschlossenen Kreislauf 8 zu schalten. Analog dazu dient das Sperrventil 83' zum Hinzuschalten des zweiten Festmotors 65 in den geschlossenen Kreislauf 8. Die Festmotoren 60 und 65 sind mit unterschiedlichem konstantem Schluckvolumen ausgebildet. Der Festmotor 60 weist, wie bereits beschrieben, ein Schluckvolumen auf, wie es beim Anlaufen des Rotors normalerweise produziert wird. Demgegenüber weist der Festmotor 65 ein Schluckvolumen auf, welches im Wesentlichen dem Teillastbereich der Windturbine 1' entspricht. Der Teillastbereich ist hierbei derjenige Bereich, in welchem das jahreszeitliche Windmittel bzw. die dadurch zur Verfügung gestellte Leistung liegt. Bei der in der Fig. 2 gezeigten Variante kann beispielsweise bei geschlossenem Sperrventil 83' wie zur Fig. 1a beschrieben vorgegangen werden. Wird jedoch ein größerer Volumenstrom Q in der Hochdruckleitung 80 zur Verfügung gestellt, welcher im Wesentlichen dem Volumenstrom des Teillastbereichs entspricht, wird das Sperrventil 83 geschlossen und zeitgleich das Sperrventil 83' geöffnet, wobei der Verstellwinkel der Verstelleinheit des Verstellmotors 62 durch die Steuerung 12 zeitgleich auf einen entsprechenden geänderten Winkel verstellt wird. Hierdurch wird eine stark verbesserte Optimierung der zur Verfügung stehenden Leistung und deren Übergabe an den ersten Generator 3 möglich.

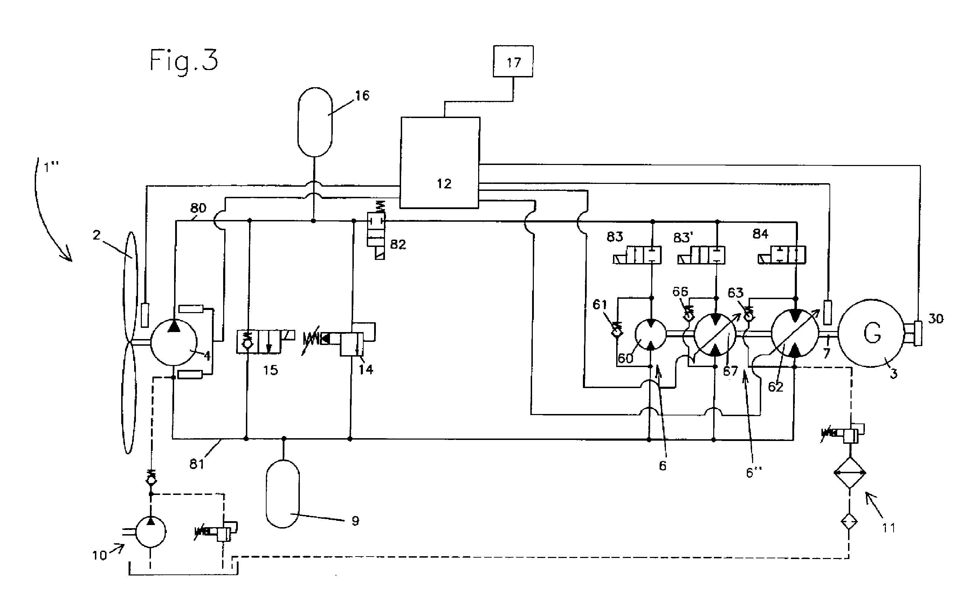

In der Fig. 3 wird eine weitere Variante der in den Fign. 1 gezeigten Grundform gezeigt. Hierbei weist die erste Motoreinheit 6 in einem Anlaufbetriebszustand den Festmotor 60 auf, wohingegen die zweite Motoreinheit 6" die Verstellmotoren 62 und 67 umfasst. Die Verstellmotoren 62 und 67 haben unterschiedliche Kapazitäten, so dass diese in verschiedenen Bereichen eines zu erwartenden Volumenstroms ihren optimalen Wirkungsgrad erreichen. So kann beispielsweise zunächst das Ventil 83' geschlossen bleiben, so dass eine Konfiguration wie in der Fig. 1a gezeigt und in der dazugehörigen Beschreibung beschrieben entsteht.

Wenn der Verstellmotor 62 kein weiteres Schluckvolumen aufnehmen kann, da dieser seine Schluckvolumengrenze erreicht hat, wird der Verstellmotor 67 zugeschaltet, was durch zeitgleiches Schalten der Sperrventile 83' und 84 vorgenommen wird. Dabei wird das Sperrventil 84 geschlossen, das Sperrventil 83' geöffnet. Ist der Verstellmotor 67 zugeschaltet, blockiert die Steuerung die Verstelleinheit des Verstellmotors 62.

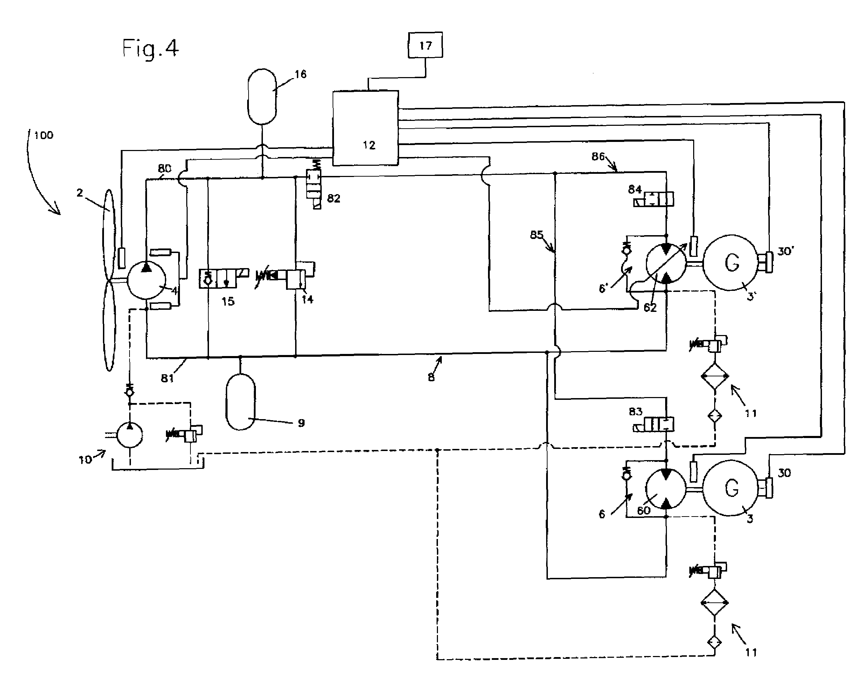

Anhand der Fig. 4 wird eine zweite Grundform einer erfindungsgemäßen Windturbine erläutert. Die Windturbine 100 weist dabei zahlreiche bereits anhand der Figuren 1 bis 3 erläuterte Merkmale auf. Der wesentliche Unterschied zu den vorhergehenden Ausführungsformen besteht darin, dass der geschlossene Kreislauf 8 nunmehr zwei geschlossene Teilkreisläufe 85 und 86 aufweist, wobei die erste Motoreinheit 6 mit dem Festmotor 60 im geschlossenen Teilkreislauf 85 und die zweite Motoreinheit 6' mit dem Verstellmotor 62 im zweiten geschlossenen Teilkreislauf 86 angeordnet ist. Die Motoreinheiten können jeweils durch entsprechendes Schalten der Sperrventile 83 und 84 in den geschlossenen Kreislauf 8 hinzugeschaltet werden. Die erste Motoreinheit 6 ist über eine erste Abtriebswelle 7 mit dem ersten Generator 3 verbunden. Die zweite Motoreinheit 6' ist über eine zweite Abtriebswelle 7' mit einem zweiten Generator 3' verbunden. Dementsprechend ist zusätzlich ein Sensor 30' zur Erfassung der Leistung des Generators 3' und ein Sensor 70' zur Erfassung der Drehbewegung der zweiten Abtriebswelle 7' verbunden. Bei der in der Fig. 4 gezeigten Variante wird zunächst der Generator 3 mit einem Verbraucher verbunden. Erst anschließend wird der Generator 3' mit einem anderen oder demselben Verbraucher verbunden.

Zum Anlaufen des Rotors 2 wird zunächst wieder das Anlaufventil 15 geöffnet. Nach Erreichen der Anlaufdrehzahl wird das Anlaufventil 15 geschlossen, so dass der durch den Rotor 2 bzw. die hydraulische Pumpe 4 erzeugte Volumenstrom sich bei geöffneten Ventilen 83 und 84 (sowie 82) in die Teilkreisläufe 85 und 86 aufteilt. Durch entsprechende Ansteuerung der Verstelleinheit des Verstellmotors 62 durch die Steuerung 12 wird der Verstellwinkel derart eingestellt, dass ein Großteil des Volumenstroms in den Teilkreislauf 85 umgeleitet wird. Demzufolge erreicht der Generator 3 schneller die Nenndrehzahl und kann mit einem Verbraucher gekoppelt werden. Erst anschließend wird der zweite Generator 3' mit einem Verbraucher verbunden. Die am Generator 3 entnehmbare Leistung entspricht der über der zweiten Motoreinheit 6' abfallenden Verlustleistung. Soll am Generator 3 mehr Leistung erzeugt werden, sollte der zweite Generator 3' mit dem Verbraucher gekoppelt werden.

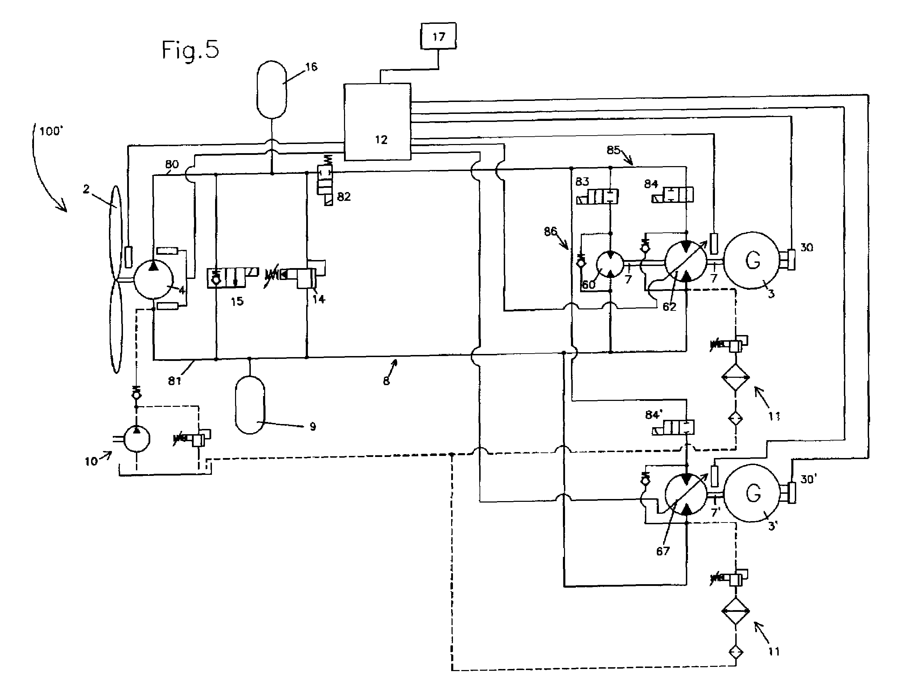

In der Fig. 5 ist eine aus der ersten und zweiten Grundform der erfindungsgemäßen Windturbine kombinierte Windturbine 100' dargestellt. Zunächst wird das dem zweiten geschlossenen Teilkreislauf 86 zugewiesene Sperrventil 84' geschlossen. Somit befindet sich lediglich der erste geschlossene Teilkreislauf 85 im geschlossenen Kreislauf 8. Im geschlossenen Teilkreislauf 85 befindet sich ein Festmotor 60 sowie ein Verstellmotor 62. In diesem Betriebszustand bildet der Festmotor 60 die erste Motoreinheit und der Verstellmotor 62 die zweite Motoreinheit. Der Steuerung kommt somit auch die Aufgabe zu, die einer Motoreinheit zugehörigen Motoren zu definieren. Diese Zuordnung kann sich im laufenden Betrieb der Windturbine jedoch ändern. Die Ansteuerung der Komponenten erfolgt analog zu den Ausführungen der Fign. 1a-c.

Wird nun aufgrund zunehmenden Windes mehr Leistung in den geschlossenen Kreislauf 8 eingetragen, kann durch zeitgleiches Öffnen des Sperrventils 84' und Fixieren des Verstellwinkels der Verstelleinheit 62 eine der Fig. 4 ähnliche Betriebsweise der Windturbine 100' angestrebt werden. In dieser zweiten Betriebsweise ist die Kombination aus Festmotor 60 und Verstellmotor 62 mit fixiertem Verstellwinkel durch die Steuerung 12 als erste Motoreinheit gruppiert worden. Die zweite Motoreinheit wird nunmehr durch den Verstellmotor 67 gebildet, welche über eine zweite Abtriebswelle 7' mit einem zweiten Generator 3' verbunden ist. Wird die Kombination aus Festmotor 60 und Verstellmotor 62 mit fixiertem Verstellwinkel als erste Motoreinheit mit konstantem Schluckvolumen aufgefasst, ergibt sich automatisch die Wirkungsweise, wie sie bereits zur Fig. 4 beschrieben wurde. Analog zur Ausführungsform der Fig. 4 kann nun der zweite Generator 3' an das Netz gekoppelt werden.

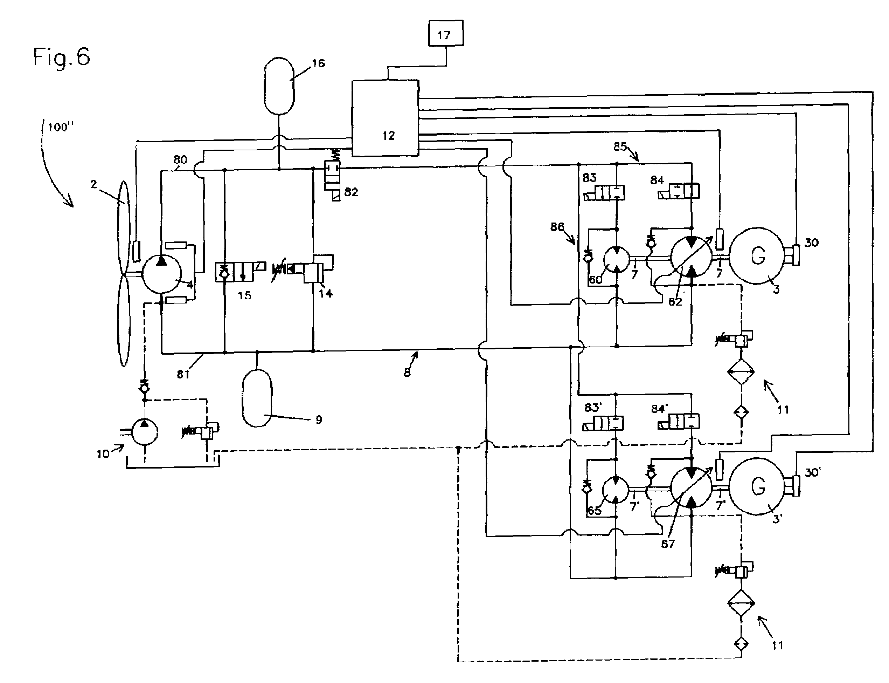

Eine weitere Ausführungsform, welche sich aus den beiden Grundformen der Fign. 1 und 4 zusammensetzt, wird anhand der Fig. 6 erläutert. In den geschlossenen Teilkreisläufen 85 und 86 sind zwei Motoren, jeweils ein Festmotor und ein Verstellmotor, eingesetzt. Durch diese redundante Anordnung der zwei Teilkreisläufe kann eine gleichmäßigere Belastung der Komponenten erreicht werden. Zum einen erlaubt es eine erste Betriebsweise, wobei durch Sperren eines jeweiligen Teilkreislaufes die im jeweils anderen Teilkreislauf angeordneten Komponenten wie anhand der Fign. 1a-c beschrieben betrieben werden. Um Komponenten gleichmäßig zu belasten, kann der Volumenstrom beispielsweise wöchentlich wechselnd lediglich in nur einen Teilkreislauf gelenkt werden. Ebenso kann jedoch analog zur Ausführungsform der Fig. 5 die an der ersten Abtriebswelle 7 angeordneten Motoren 60, 62 als erste Motoreinheit verstanden werden, wohingegen die im zweiten Teilkreislauf 86 angeordneten Motoren 65, 67 eine zweite Motoreinheit bilden, da hier das Schluckvolumen des Verstellmotors 67 weiterhin durch die Steuerung 12 durch Verstellung des Verstellwinkels veränderbar ist. Falls lediglich der Verstellwinkel des Verstellmotors 67 der zweiten Motoreinheit des zweiten Teilkreislaufs 86 verstellt wird, blockiert die Steuerung 12 eine Veränderung des Verstellwinkels der anderen im Teilkreislauf 85 oder 86 angeordneten Verstelleinheiten, in diesem Falle der Verstelleinheit 62, welche vorzugsweise in einem Lastbereich mit gutem Wirkungsgrad eingestellt ist. Selbstverständlich ist es auch möglich, die Motoren der einzelnen Teilkreisläufe 85 bzw. 86 mit unterschiedlichen Schluckvolumina auszubilden, um die verschiedenen Lastbereiche der Windturbine 100" mit jeweils hohem Wirkungsgrad abdecken zu können, wobei die Steuerung in einem Zeitpunkt des ersten Betriebszustands jeweils nur eine einzige Verstelleinheit durch die Steuerung 12 angesteuert und die übrigen Verstelleinheiten blockiert.

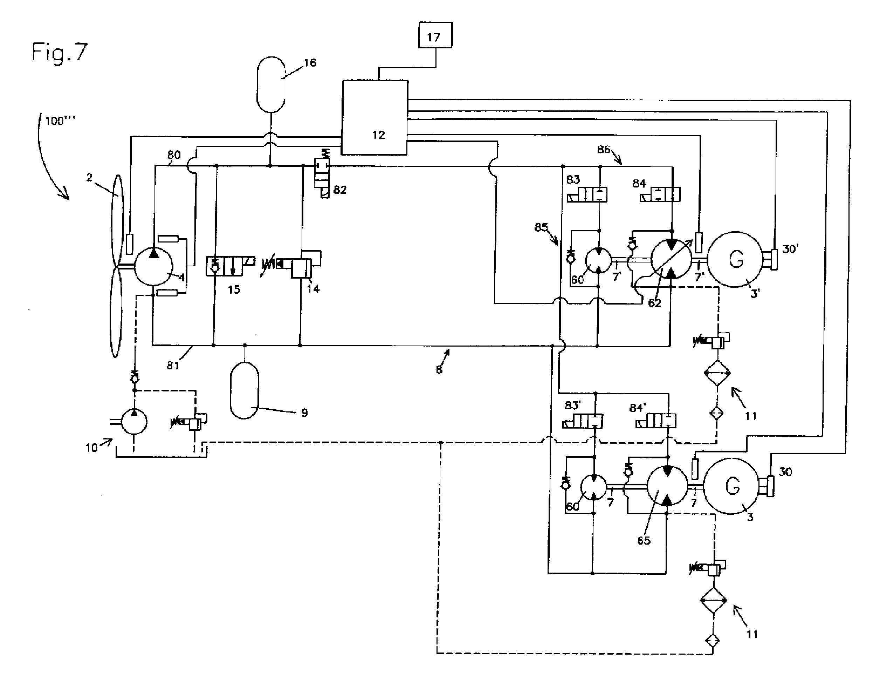

Eine weitere Kombination der ersten und zweiten Grundform der Windturbine ist in der Fig. 7 dargestellt. Im ersten geschlossenen Teilkreislauf 85 ist eine erste Motoreinheit, welche einen Festmotor 60 und einen Festmotor 65 aufweist, vorhanden. Die im zweiten geschlossenen Teilkreislauf angeordnete zweite Motoreinheit weist einen Festmotor 60 und einen Verstellmotor 62 auf. Durch Schließen der Ventile 83' und 83" kann die vormals als zweite Motoreinheit, welche den Festmotor 60 und dem Verstellmotor 62 umfasst, gruppierte Motorkombination durch die Steuerung als eine den Festmotor 60 aufweisende erste Motoreinheit und eine den Verstellmotor 62 aufweisende zweite Motoreinheit umgruppiert und angesteuert werden.

Hinsichtlich der Ansteuerung der verschiedenen Generatoren wird wieder auf die Ausführungen zu den Figuren 1, 4 und 5 verwiesen.

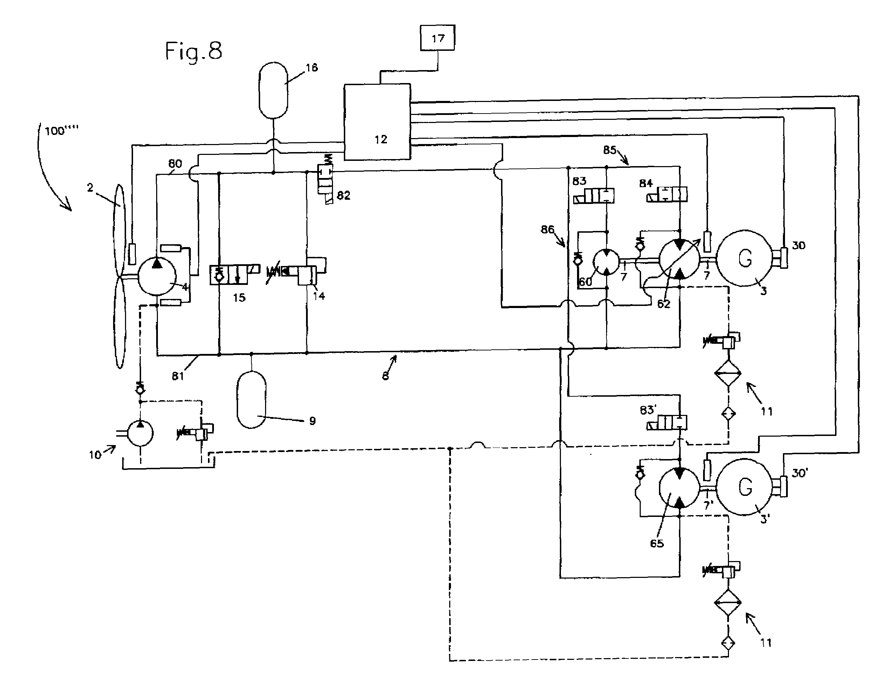

Eine weitere Variante, welche die erste und zweite Grundform der Windturbine kombiniert, ist in der Fig. 8 dargestellt. Hierbei weist der erste geschlossene Teilkreislauf 85 einen Festmotor 60 und einen Verstellmotor 62 auf. Der zweite geschlossene Kreislauf 86 weist einen Festmotor 65 auf. Beim Schließen des Ventils 83' wird die Windturbine 100"" wie in Fig. 1 beschrieben betrieben. Durch Öffnen des Steuerventils 83' und gleichzeitiges Schließen des Steuerventils 83 geht die Windturbine 100"" in einen wie in der Fig. 4 dargestellten Betrieb über. Zusätzlich kann der Festmotor 60 hinzugeschaltet werden.

Ob ein Motor zur ersten oder zur zweiten Motoreinheit zugehörig ist, wird durch die Steuerung 12 im jeweiligen Betriebszustand ermittelt. Die zweite Motoreinheit umfasst zumindest einen Verstellmotor, wobei dieser durch die Steuerung 12 angesteuert wird, während alle übrigen Verstellmotoren der jeweiligen Ausführungsform der Windturbine durch die Steuerung gesperrt bzw. unveränderbar sind.

Die Definition der zur ersten und zweiten Motoreinheit gehörenden Motoren wird von der Steuerung vorgenommen, so dass in verschiedenen Betriebszuständen ein Motor, welcher im vorherigen Betriebszustand der ersten Motoreinheit zugeordnet war, im neuen Betriebszustand der zweiten Motoreinheit zugeordnet ist. Unabhängig davon ist allen Ausführungsformen jedoch gemein, dass die Steuerung in Betriebszuständen, in welchen mindestens einer der Generatoren mit einem Verbraucher verbunden ist, lediglich einen Verstellmotor ansteuert. Die übrigen Verstellmotoren werden auf einen Verstellwinkel fixiert.

## Patentansprüche

1. Windturbine (1-1"; 100-100""), welche einen Rotor (2),
eine hydraulische Pumpe (4), welche über eine Rotorwelle (5) mit dem Rotor verbunden ist, mindestens einen ersten Generator (3),
eine erste und eine zweite hydraulische Motoreinheit (6, 6'), wobei mindestens die erste Motoreinheit über eine erste Abtriebswelle (7) mit dem mindestens einen ersten Generator (3) verbunden ist,
einen geschlossenen Kreislauf (8), welcher eine Hochdruckleitung (80) zum Führen eines hydraulischen Mediums zur mindestens ersten und zweiten Motoreinheit und eine Niederdruckleitung (81) zum Führen des hydraulischen Mediums von der ersten und zweiten Motoreinheit zur Pumpe aufweist,
sowie eine Steuerung (12) zum Regulieren eines Volumenstroms im geschlossenen Kreislauf umfasst,
**dadurch gekennzeichnet, dass** die erste Motoreinheit mindestens einen Festmotor (60, 65) mit einem konstanten Schluckvolumen umfasst und/oder die Steuerung (12) derart eingerichtet ist, dass die erste Motoreinheit auf ein konstantes Schluckvolumen eingeregelt ist und die zweite Motoreinheit mindestens einen Verstellmotor (62, 67) mit einem verstellbaren Schluckvolumen aufweist.

2. Windturbine nach Anspruch 1, **dadurch gekennzeichnet, dass** die erste Motoreinheit (6) in einem Betriebszustand vom hydraulischen Medium durchflossen wird und den ersten Generator (3) unter Abgabe von Leistung antreibt und die Steuerung (12) derart ausgebildet ist, dass die zweite Motoreinheit (6') ansteuerbar ist und der Volumenstrom im geschlossenen Kreislauf (8) durch eine Veränderung des Schluckvolumens der zweiten Motoreinheit (6') geregelt wird.

3. Windturbine nach einem der vorhergehenden Ansprüche, **dadurch gekennzeichnet, dass** mindestens ein weiteres Ventil (82, 83, 83', 84, 84') zum vorzugsweise teilweisen Sperren der ersten und/oder zweiten Motoreinheit (6, 6') vorhanden ist.

4. Windturbine nach einem der vorhandenen Ansprüche, **dadurch gekennzeichnet, dass** die Steuerung (12) zum Regulieren des Volumenstroms mit einem Sensor (50) zur Erfassung der Bewegung der Rotorwelle, einem Sensor (40) zur Erfassung einer Druckdifferenz zwischen der Hochdruck- und der Niederdruckleitung und ein Sensor (30, 30') zur Erfassung der Leistung des ersten Generators und/oder ein Sensor (70, 70') zur Erfassung der Bewegung der ersten Abtriebswelle vorhanden ist.

5. Windturbine nach einem der vorhergehenden Ansprüche, **dadurch gekennzeichnet, dass** ein mit der Niederdruckleitung (81) verbundener Niederdruckspeicher (9) und/oder ein mit der Hochdruckleitung (80) verbundener Hochdruckspeicher (16) und/oder eine Speiseölkreislauf (10) und/oder ein Heißölwechselkreislauf (11) vorhanden ist.

6. Windturbine nach einem der vorhergehenden Ansprüche, **dadurch gekennzeichnet, dass** eine Vorrichtung (17) zur Erfassung von Wetterdaten vorhanden ist und die Vorrichtung (17) mit der Steuerung (12) verbunden ist.

7. Windturbine nach einem der vorhergehenden Ansprüche, **dadurch gekennzeichnet, dass** der geschlossene Kreislauf (8) ein die Hochdruckleitung und die Niederdruckleitung direkt verbindendes Ventil, vorzugsweise ein Überdruckventil (14) und/oder ein Anlaufventil (15), aufweist.

8. Windturbine nach einem der vorhergehenden Ansprüche, **dadurch gekennzeichnet, dass** auch die zweite Motoreinheit (6') über die erste Abtriebswelle (7) mit dem ersten Generator (3) verbunden ist.

9. Windturbine nach einem der Ansprüche 1 bis 8, **dadurch gekennzeichnet, dass** die zweite Motoreinheit (6') über eine zweite Abtriebswelle (7') mit einem zweiten Generator (3') verbunden ist.

10. Verfahren zum Betrieb einer Windturbine nach einem der vorhergehenden Ansprüche, **dadurch gekennzeichnet, dass** nach einer Ankopplung des ersten Generators (3) an einen Verbraucher die Steuerung (12) zur Regulierung des Volumenstroms den Volumenstrom mittels der zweiten Motoreinheit (6') regelt.

11. Verfahren zum Betrieb einer Windturbine nach Anspruch 10, **dadurch gekennzeichnet, dass** der zweite Generator (3') nach dem ersten Generator (3) an einen Verbraucher gekoppelt wird.
